# FASCICULE DE BREVET EUROPEEN

(11) **EP 3 898 269 B1**
(45) Date de publication et mention de la délivrance du brevet: **08.02.2023**
(21) Numéro de dépôt: 19868235.3
(22) Date de dépôt: 05.12.2019
(51) Int. Cl.: B60C 1/00

(54) **PNEUMATIQUE POUR CAMIONNETTE OPTIMISE**
OPTIMIERTER REIFEN FÜR TRANSPORTER
OPTIMIZED TYRE FOR A VAN

(30) Priorité: 30.01.2019 FR 1900824; 19.12.2018 FR 1873267
(43) Date de publication de la demande: 27.10.2021
(73) Titulaire: COMPAGNIE GENERALE DES ETABLISSEMENTS MICHELIN, 63000 Clermont-Ferrand (FR)
(72) Inventeur: JOSEPH, Aurélie, 63040 CLERMONT-FERRAND Cedex 9 (FR); BERVAS, Patrick, 63040 CLERMONT-FERRAND Cedex 9 (FR); HUGUENOT, Gérald, 63040 CLERMONT-FERRAND Cedex 9 (FR); GUILHEM, Sébastien, 63040 CLERMONT-FERRAND Cedex 9 (FR)
(74) Mandataire: Boyer, Chris Michel
(86) Numéro de dépôt international: PCT/FR2019/052941
(87) Numéro de publication internationale: WO 2020/128207

(56) Documents cités:
- WO-A1-2018/172695
- WO-A1-2018/178568
- WO-A1-2018/185436
- FR-A1- 3 041 568

## Description

L'invention a pour objet un pneumatique radial destiné à équiper un véhicule de transport, appelé usuellement camionnette.

Le domaine de pneumatique plus particulièrement concerné est celui des pneumatiques, dont la pression nominale est au moins égale à 3.2 bar et au plus égale à 6 bar, pour un indice de charge au moins égal à 88 et au plus égal à 121, au sens de la norme de la European Tyre and Rim Technical Organisation ou « ETRTO ». En outre le diamètre au seat D, définissant le diamètre de la jante de montage du pneumatique, est au moins égal à 14 pouces, et au plus égal à 19 pouces. Les dimensions principales de ces applications sont : 195/70 R15C 104/102R, 195/75 R16C 107/105R, 215/65 R16C 109/107T, 225/70 R15C 112/110S, 225/65 R16C 112/110R, 215/70 R15C 109/107S, 205/65 R16C 107/105T, 195/65 R16C 104/102R, 235/65 R16C 115/113R, 205/70 R15C 106/104R, 215/60 R16C 103/101T, 205/75 R16C 110/108R, 195/75 R16C 110/108R, 225/75 R16C 121/120R, 215/75 R16C 116/114R, 215/75 R16C 113/111R, 235/65 R16C 121/119R. L'invention leur est applicable ainsi qu'aux autres dimensions de ce type d'application.

Dans ce qui suit, et par convention, les directions circonférentielle XX', axiale YY' et radiale ZZ' désignent respectivement une direction tangente à la surface de roulement du pneumatique selon le sens de rotation du pneumatique, une direction parallèle à l'axe de rotation du pneumatique et une direction perpendiculaire à l'axe de rotation du pneumatique. Par «radialement intérieur », respectivement « radialement extérieur», on entend «plus proche de l'axe de rotation du pneumatique », respectivement « plus éloigné de l'axe de rotation du pneumatique». Par «axialement intérieur », respectivement « axialement extérieur», on entend «plus proche du plan équatorial du pneumatique», respectivement « plus éloigné du plan équatorial du pneumatique», le plan équatorial XZ du pneumatique étant le plan passant par le milieu de la surface de roulement du pneumatique et perpendiculaire à l'axe de rotation du pneumatique.

De façon générale, un pneumatique comprend une bande de roulement, destinée à entrer en contact avec le sol par l'intermédiaire d'une surface de roulement, et reliée par l'intermédiaire de deux flancs à deux bourrelets, assurant la liaison mécanique entre le pneumatique et la jante sur laquelle il est monté. Un pneumatique radial comprend une armature de renforcement, comprenant une armature de sommet, radialement intérieure à la bande de roulement, et une armature de carcasse, généralement radialement intérieure à l'armature de sommet.

La bande de roulement comprend des éléments en relief séparés les uns des autres par des creux. L'agencement des éléments en relief et des creux constitue la sculpture de la bande de roulement. Les éléments en relief s'étendent radialement vers l'extérieur à partir d'une surface de fond jusqu'à la surface de roulement. Pour un pneumatique à l'état neuf, la distance radiale entre la surface de fond et la surface de roulement, est appelée hauteur radiale des éléments en relief et pour la hauteur radiale maximale, généralement mesurée au plan équatorial, hauteur de sculpture Hs. La proportion de creux par rapport aux éléments en relief est définie par un taux d'entaillement volumique TEV, égal au rapport entre le volume total des creux et la somme des volumes totaux respectifs des creux et des éléments en relief. Le volume total des creux est la somme des volumes élémentaires des creux ayant, typiquement, une largeur axiale au moins égale à 1 mm, c'est-à-dire des creux qui ne sont pas de simples incisions. Les mesures de volumes sont réalisées par des relevés de profil de la bande de roulement du pneumatique neuf, par exemple, par laser. Le profil de la bande de roulement a une largeur axiale égale à la largeur axiale de la surface de roulement en contact avec le sol, lorsque le pneumatique, monté sur sa jante nominale, est gonflé à sa pression nominale et soumis à sa charge nominale, les dites conditions nominales étant définies par la norme de l'ETRTO. Pour la bande de roulement d'un pneumatique de camionnette de l'état de la technique de référence, les éléments en relief, à l'état neuf, ont généralement une hauteur de sculpture Hs comprise entre 9.5 et 11mm et le taux d'entaillement volumique TEV est d'environ 18%.

Parmi les creux de la bande de roulement ayant un volume total Vc, on distingue des creux dits principaux, ayant chacun une largeur moyenne au moins égale à 6 mm et ayant un volume total Vcp. Ces creux principaux ont, en particulier, pour fonction de stocker l'eau dans l'aire de contact entre la bande de roulement et le sol et de l'évacuer hors de l'aire de contact dans le but d'assurer la performance d'hydroplanage. Sur ces gammes, malgré la pression des pneumatiques plus élevée que celle des véhicules de tourisme et donc diminuant le risque, l'indice de vitesse est élevé et donc le risque d'aquaplaning doit être pris en compte en conception. Le taux d'entaillement volumique est spécifique, globalement inférieur à celui des véhicules de tourisme et globalement supérieur à celui des véhicules poids-lourd.

Ces creux principaux sont qualifiés de creux sensiblement circonférentiels, ou longitudinaux, lorsque leur ligne moyenne forme avec la direction circonférentielle XX' du pneumatique un angle au plus égal à 45°. Ils sont qualifiés de creux sensiblement axiaux, ou transversaux, lorsque leur ligne moyenne forme avec la direction circonférentielle XX' du pneumatique un angle au moins égal à 45°.

La bande de roulement comprend au moins un matériau polymérique de type mélange élastomérique, c'est-à-dire un matériau polymérique obtenu par mélangeage d'au moins un élastomère, d'au moins une charge renforçante et d'un système de réticulation. Le plus souvent, la bande de roulement est constituée par un mélange élastomérique unique.

Une caractéristique physique usuelle d'un mélange élastomérique est sa température de transition vitreuse Tg, température à laquelle le mélange élastomérique passe d'un état caoutchouteux déformable à un état vitreux rigide. La température de transition vitreuse Tg d'un mélange élastomérique est généralement déterminée lors de la mesure des propriétés dynamiques du mélange élastomérique, sur un viscoanalyseur par exemple de type Metravib VA4000, selon la norme ASTM D 5992-96. La mesure des propriétés dynamiques est réalisée sur un échantillon de mélange élastomérique vulcanisé, c'est dire cuit jusqu'à un taux de conversion d'au moins 90%, l'échantillon ayant la forme d'une éprouvette cylindrique ayant une épaisseur égale à 2 mm et une section égale à 78,5 mm². On enregistre la réponse de l'échantillon de mélange élastomérique à une sollicitation sinusoïdale en cisaillement simple alterné, ayant une amplitude crête-crête égale à 0,7 MPa et une fréquence égale à 10 Hz. On effectue un balayage en température à vitesse de montée en température constante de +1.5°C/min. Les résultats exploités sont généralement le module complexe de cisaillement dynamique G*, comprenant une partie élastique G' et une partie visqueuse G", et la perte dynamique tgδ, égale au rapport G"/G'. La température de transition vitreuse Tg est la température à laquelle la perte dynamique tgδ atteint un maximum lors du balayage en température.

Le comportement mécanique d'un mélange élastomérique peut être caractérisé, en statique, par sa dureté Shore A, mesurée conformément aux normes DIN 53505 ou ASTM 2240, et, en dynamique, par son module complexe de cisaillement dynamique G*, tel que précédemment défini, à une température donnée, typiquement à 23°C.

La dissipation thermique, ou hystérèse, d'un mélange élastomérique peut être caractérisée, en statique, par sa perte à 60°C, qui est une perte d'énergie à 60 °C, mesurée par rebond à énergie imposée mesurée au sixième choc et dont la valeur, exprimée en %, est le rapport entre la différence entre l'énergie fournie et l'énergie restituée et l'énergie fournie. Elle peut également être caractérisée, en dynamique, par sa perte dynamique tgδ, telle que précédemment définie, à une température donnée, typiquement à 23°C.

Le matériau de la bande de roulement d'un pneumatique de camionnette de l'état de la technique de référence est un mélange élastomérique ayant une température de transition vitreuse Tg égale à -23°C, une dureté Shore A de 68 et plus et une perte dynamique tgδ à 23°C d'environ 0,30.

L'armature de sommet, radialement intérieure à la bande de roulement et le plus souvent, radialement extérieure à l'armature de carcasse, comprend, radialement de l'extérieur vers l'intérieur, une armature de frettage comprenant au moins une couche de frettage et une armature de travail comprenant au moins deux couches de travail.

L'armature de sommet a pour fonction de reprendre à la fois les sollicitations mécaniques de gonflage, générées par la pression de gonflage du pneumatique et transmises par l'armature de carcasse, et les sollicitations mécaniques de roulage, générées par le roulage du pneumatique sur un sol et transmises par la bande roulement. L'armature de travail a pour fonction spécifique de conférer au pneumatique de la rigidité selon les directions circonférentielle, axiale et radiale et, en particulier, de la tenue de route. L'armature de frettage a pour fonction spécifique d'apporter une rigidité circonférentielle supplémentaire par rapport à l'armature de travail, pour limiter les déformations radiales du pneumatique.

L'armature de frettage, pour un pneumatique pour camionnette, comprend le plus souvent une seule couche de frettage. Une couche de frettage comprend des renforts généralement en textile, par exemple en polyamide aliphatique tel que le nylon, enrobés dans un mélange élastomérique et parallèles entre eux. Les renforts forment, avec la direction circonférentielle XX' du pneumatique, un angle AF, mesuré dans le plan équatorial XZ du pneumatique, au plus égal à 5°, en valeur absolue.

L'armature de travail, pour un pneumatique de camionnette, comprend usuellement deux couches de travail, radialement superposées, comprenant des renforts métalliques enrobés dans un mélange élastomérique, parallèles entre eux dans chaque couche et croisés d'une couche à la suivante, en formant, avec la direction circonférentielle XX' du pneumatique, des angles (AT1, AT2), mesurés dans le plan équatorial XZ du pneumatique, dont la valeur absolue est généralement de 22°.

Les renforts métalliques des couches de travail sont des câbles constitués par un assemblage de fils métalliques. A titre d'exemple, les renforts métalliques utilisés pour le pneumatique de camionnette de l'état de la technique, pris en référence, est un câble 4.32 constitué par un assemblage torsadé de quatre fils métalliques ayant chacun un diamètre égal à 0.32 mm.

Radialement à l'intérieur de l'armature de sommet, l'armature de carcasse comprend au moins une couche de carcasse comprenant des renforts le plus souvent en matériau textile, enrobés dans un matériau élastomérique et parallèles entre eux. Les renforts d'une couche de carcasse forment, avec la direction circonférentielle XX' du pneumatique, un angle AC au moins égal à 85° et au plus égal 95°. Des matériaux textiles couramment utilisés pour les renforts d'une couche de carcasse, pour un pneumatique de camionnette de l'état de la technique, sont un polyester tel qu'un polyéthylène téréphtalate (PET) ou un polyamide aromatique, tel que l'aramide.

Une couche de carcasse peut être retournée ou non retournée. Une couche de carcasse est dite retournée, lorsqu'elle comprend une partie principale, reliant les deux bourrelets du pneumatique entre eux, et s'enroule, dans chaque bourrelet, de l'intérieur vers l'extérieur du pneumatique autour d'un élément de renforcement circonférentiel ou tringle, pour former un retournement ayant une extrémité libre. Une couche de carcasse est non retournée, lorsqu'elle est constituée uniquement d'une partie principale, reliant les deux bourrelets entre eux, sans s'enrouler autour d'une tringle.

Les principales performances visées pour un pneumatique de camionnette sont, de manière non exhaustive, les adhérences longitudinale et transversale sur sol mouillé et sur sol sec, le comportement, en particulier à faible accélération transversale, l'usure et la résistance au roulement.

Actuellement, les constructeurs automobiles expriment une forte demande vis-à-vis d'une baisse de la résistance au roulement, pour diminuer la consommation de carburant. Or il est connu de l'homme du métier qu'une baisse de la résistance au roulement se fait généralement au détriment d'autres performances-clés telles que les divers types d'adhérence (longitudinale/transversale, sur sol sec/mouillé) ou le comportement.

Les inventeurs se sont données pour objectif d'améliorer, par rapport à un pneumatique de camionnette de l'état de la technique tel que précédemment décrit, le compromis entre la résistance au roulement et des performances antagonistes telles que les divers types d'adhérence (longitudinale/transversale, sur sol sec/mouillé).

Ce but a été atteint, selon l'invention, par un pneumatique pour véhicule de transport dont la pression nominale est au moins égale à 3.2 bar et au plus égale à 6 bar, pour un indice de charge au moins égal à 88 et au plus égal à 121comprenant :
- une bande de roulement, destinée à entrer en contact avec un sol par l'intermédiaire d'une surface de roulement et comprenant des éléments en relief s'étendant radialement vers l'extérieur à partir d'une surface de fond jusqu'à la surface de roulement sur une hauteur radiale maximale Hs, la bande de roulement comprenant au moins un témoin d'usure,
- les éléments en relief ayant un volume total Vp et étant séparés par des creux ayant un volume total Vc, une partie des creux étant des creux principaux, ayant chacun une largeur moyenne au moins égale à 6 mm et l'ensemble des creux principaux ayant un volume total Vcp,
- la bande de roulement ayant un taux d'entaillement volumique TEV, défini comme le rapport entre le volume total Vc des creux et la somme du volume total Vc des creux et du volume total Vp des éléments en relief, au moins égal à 18% et au plus égal à 23%,
- la bande de roulement comprenant en outre au moins un mélange élastomérique ayant une température de transition vitreuse Tg, une dureté Shore A et une perte dynamique tgδ à 23°C,
- une couche intermédiaire radialement intérieure à la bande de roulement comprenant en outre un mélange élastomérique ayant une perte dynamique tgδa à 23°C,
- une armature de frettage, radialement intérieure à la couche intermédiaire, comprenant au moins une couche de frettage comprenant des renforts textiles enrobés dans un mélange élastomérique, parallèles entre eux et formant, avec une direction circonférentielle XX' du pneumatique, un angle AF, mesuré dans le plan équatorial XZ du pneumatique, au plus égal à 5°en valeur absolue,
- une armature de travail, radialement intérieure à l'armature de frettage, comprenant au moins deux couches de travail, radialement superposées, comprenant des renforts métalliques enrobés dans un mélange élastomérique, parallèles entre eux dans chaque couche et croisés d'une couche à la suivante, en formant, avec la direction circonférentielle XX' du pneumatique, un angle (AT1, AT2), mesuré dans le plan équatorial XZ du pneumatique, dont la valeur absolue est au moins égale à 23° et au plus égale à 30°,
- une armature de carcasse comprenant au moins une couche de carcasse et au plus deux couches de carcasse, chaque couche de carcasse comprenant des renforts textiles enrobés dans un matériau élastomérique, parallèles entre eux et formant, avec la direction circonférentielle XX' du pneumatique, un angle AC au moins égal à 85° et au plus égal 95°,
- des mélanges élastomériques de renfort flanc (XX) axialement extérieurs à la couche de carcasse la plus radialement extérieure, d'une épaisseur axiale Epf, mesurée au point le plus axialement extérieur du pneumatique,
- le au moins un mélange élastomérique de la bande de roulement ayant une température de transition vitreuse Tg au moins égale à -30°C et au plus égale à -24°C, une dureté Shore A au moins égale à 55 et au plus égale à 66 et une perte dynamique tgδ à 23°C au moins égale à 0.15 et au plus égale à 0.27,
- le mélange élastomérique de la couche intermédiaire ayant une perte dynamique tgδa à 23°C au plus égale à la perte dynamique tgδ du ou des mélanges élastomériques constituant la bande de roulement,
- la hauteur sculpture Hs étant au moins égale à 6.5 mm et au plus égale à 9 mm, l'épaisseur axiale Epf étant au moins égale à 3mm et au plus égale à 7mm.

Un mélange élastomérique de bande de roulement à basse hystérèse contribue à une faible résistance au roulement, cet effet étant renforcé par la hauteur radiale limitée des éléments en relief de bande de roulement. Par ailleurs il est nécessaire dans ce type d'application pour atteindre les performances désirées de disposer sous la bande de roulement d'une couche intermédiaire dont la perte dynamique est également basse et au plus égale à celle du ou des mélanges élastomériques compris dans la bande de roulement et prévus pour être en contact avec le sol de roulage pendant un usage normal du pneumatique sur un véhicule.

Par ailleurs, un mélange élastomérique de bande de roulement à basse dureté, donc plutôt mou, permet d'augmenter l'adhérence sur sol mouillé mais dégrade le comportement. Toutefois l'impact négatif du mélange élastomérique mou sur le comportement est au moins en partie compensé par une faible hauteur radiale des éléments en relief de bande de roulement.

Dans ce type de véhicules fréquemment utilisés pour faire des déplacements en ville, les pneumatiques sont soumis à des contacts sur les flancs le long des trottoirs. Ceci nécessite un soin tout particulier dans la conception des flancs du pneumatique, et notamment dans l'épaisseur axiale Epf des mélanges élastomériques de renforts flancs qui constituent les mélanges élastomériques radialement extérieurs à la couche de carcasse la plus axialement extérieure, ceci tout en optimisant cette épaisseur afin de ne pas détériorer la performance en résistance au roulement.

Concernant la température de transition vitreuse Tg, une plage de valeurs assez large permet d'ajuster le compromis entre la résistance au roulement et l'adhérence sur sol mouillé : une température de transition vitreuse Tg plutôt basse est favorable à la résistance au roulement, alors qu'une température de transition vitreuse Tg plutôt élevée est favorable à l'adhérence.

Enfin, un volume total Vcp de l'ensemble des creux principaux adapté à la pression de ces pneumatiques contribue à une bonne adhérence sur sol mouillé, en particulier avec une forte hauteur d'eau, grâce à son effet de stockage et d'évacuation de l'eau.

Un mode de réalisation préféré pour obtenir les caractéristiques du matériau de la bande de roulement dont la température de transition vitreuse Tg est au plus égale à - 30°c et au moins égale à -24°C est que le mélange élastomérique soit un élastomère diénique modifié comprenant au moins un groupe fonctionnel comprenant un atome de silicium, ce dernier se situant au sein de la chaîne principale, y compris les extrémités de chaîne. L'expression « atome se situant au sein de la chaîne principale de l'élastomère, y compris les extrémités de chaîne », s'entend ici comme n'étant pas un atome pendant (ou latéral) le long de la chaîne principale de l'élastomère mais étant un atome intégré à la chaîne principale.

Du point de vue de sa composition chimique, le mélange élastomérique diénique modifié comprend 100 pce (parties pour cent d'élastomère) d'une matrice élastomère comprenant un élastomère diénique modifié. Par définition, un élastomère diénique est un homopolymère ou un copolymère, issu au moins en partie de monomères diènes, c'est-à-dire de monomères porteurs de deux doubles liaisons carbone-carbone conjuguées ou non. Préférentiellement le mélange élastomérique comprend l'élastomère diénique modifié à un taux au moins égal à 20 pce.

La composition chimique du mélange élastomérique de la bande de roulement selon l'invention contribue à une amélioration de la résistance au roulement et ou de l'usure et ou de l'adhérence sur sol mouillé ou un décalage du compromis entre ces performances.

Selon certaines variantes de composition chimique du mélange élastomérique de la bande de roulement, le groupe fonctionnel comprenant un atome de silicium se situe en une extrémité de la chaîne principale de l'élastomère.

Selon des mises en oeuvre de ces variantes, le groupe fonctionnel comprend une fonction silanol. Selon d'autres mises en oeuvre, l'atome de silicium du groupe fonctionnel est substitué par au moins une fonction alcoxy, éventuellement totalement ou partielle hydrolysée en hydroxyle.

Selon d'autres variantes, le groupe fonctionnel se situe dans la chaîne élastomère principale, on dira alors que l'élastomère diénique est couplé ou encore fonctionnalisé en milieu de chaîne. L'atome de silicium du groupe fonctionnel lie alors les deux branches de la chaîne principale de l'élastomère diénique. Selon ces variantes, l'atome de silicium du groupe fonctionnel est substitué par au moins une fonction alcoxy, éventuellement totalement ou partielle hydrolysée en hydroxyle.

Selon les variantes de l'invention selon lesquelles le groupe fonctionnel comprend une fonction silanol en extrémité de chaîne, le groupement fonctionnel peut être une fonction silanol ou encore un groupement polysiloxane ayant une extrémité silanol. Des élastomères diéniques modifiés correspondant sont décrits notamment dans les documents EP 0 778 311 A1, WO 2011/042507 A1.

Selon l'une quelconque des variantes de l'invention selon lesquelles l'atome de silicium du groupe fonctionnel est substitué par au moins une fonction alcoxy, éventuellement totalement ou partielle hydrolysée en hydroxyle, l'atome de silicium peut également être substitué, directement ou par l'intermédiaire d'un radical hydrocarboné divalent, par au moins une autre fonction comprenant au moins un hétéroatome choisi parmi N, S, O, P. De préférence, l'atome de silicium est substitué par au moins une autre fonction par l'intermédiaire d'un radical hydrocarboné divalent, plus préférentiellement aliphatique linéaire en C1- C18. On peut, à titre d'exemple, citer parmi ces autres fonctions, les amines primaires, secondaires ou tertiaires, cycliques ou non, les isocyanates, les imines, les cyano, les thiols, les carboxylates, les époxydes, les phosphines primaires, secondaires ou tertiaires. L'autre fonction est de préférence une amine tertiaire, plus préférentiellement un groupement diéthylamino- ou diméthylamino-. La fonction alcoxy est de préférence méthoxy, éthoxy, butoxy ou propoxy. Des élastomères diéniques modifiés correspondant à ces variantes sont décrits notamment dans les documents WO 2009/133068 A1, WO 2015/018743 A1.

La modification de l'élastomère diénique par au moins un groupe fonctionnel comprenant un atome de silicium, n'exclut pas une autre modification de l'élastomère par exemple en extrémité de chaîne par une fonction amine introduite lors de l'initiation de la polymérisation, tel que décrit dans WO 2015/018774 A1, WO 2015/018772 A1.

Préférentiellement, l'élastomère diénique modifié selon l'invention est un polymère de 1,3-butadiène, plus préférentiellement un copolymère de 1,3-butadiène et de styrène (SBR).

L'élastomère diénique modifié selon l'invention peut être, selon différentes variantes, utilisé seul dans le mélange élastomérique ou en coupage avec au moins un autre élastomère diénique conventionnellement utilisé en pneumatique, qu'il soit étoilé, couplé, fonctionnalisé par exemple à l'étain ou au silicium, ou non.

Egalement du point de vue de sa composition chimique, le mélange élastomérique de la bande de roulement selon l'invention comprend une résine plastifiante de type résine thermoplastique à un taux au moins égal à 20 pce.

Préférentiellement l'armature de carcasse peut être constituée d'une couche de carcasse retournée et engagée. Dans ce cas le retournement de la couche de carcasse repart de chaque bourrelet, traverse les flancs du pneumatique vers le sommet. Si l'extrémité libre de la couche de carcasse est axialement intérieure à l'extrémité axiale d'une des couches de l'armature de sommet, elle est dite engagée. Cette solution est particulièrement intéressante dans l'usage de pneumatique pour camionnette pour résister à la pression interne et optimiser la masse du pneumatique.

Un autre mode de réalisation préféré est que l'armature de carcasse soit constituée de deux couches de carcasse pour améliorer la résistance au choc contre les trottoirs tout en facilitant la fabrication comparativement à d'autres solutions.

La hauteur radiale maximale des éléments en relief de la bande de roulement, ou hauteur sculpture Hs, est au moins égale à 6.5 mm et au plus égale à 9 mm. Cette plage de valeurs de hauteur radiale permet d'obtenir un compromis satisfaisant entre les performances de résistance au roulement, de comportement et d'adhérence sur sol mouillé avec les valeurs de la transition vitreuse Tg choisies pour le ou les matériaux de la bande de roulement. Préférentiellement la hauteur radiale maximale des éléments en relief de la bande de roulement, ou hauteur sculpture Hs, est au moins égale à 7 mm et au plus égale à 8.5 mm.

Le taux d'entaillement volumique TEV de la bande de roulement est au moins égal à 18% et au plus égal à 23%. Cette plage de valeurs de taux d'entaillement permet de garantir une bonne performance en adhérence sur sol mouillé, grâce à un taux d'entaillement de bande de roulement suffisamment élevé pour compenser une hauteur de sculpture limitée. Préférentiellement le taux d'entaillement volumique TEV de la bande de roulement est au moins égal à 19% et au plus égal à 22%.

Préférentiellement, pour obtenir un bon équilibre entre performance en hydroplanage et en comportement, les creux principaux sont orientés selon la direction circonférentielle, préférentiellement, la bande de roulement comprend au moins 3 au plus 4 creux principaux circonférentiels.

Avantageusement, la bande de roulement comprend des creux, formant un angle avec la direction longitudinale au moins égal à 40° avec l'axe longitudinal XX', ayant une largeur variable et d'une valeur moyenne au plus égale à 2 mm. La largeur moyenne au plus égale à 2 mm permet que ces creux se ferment dans le passage du contact avec le sol de roulement et de maintenir malgré ces creux une rigidité de la bande de roulement favorable à la résistance au roulement. Le caractère variable de cette épaisseur permet d'augmenter cet effet.

Préférentiellement le ou les mélanges élastomériques constitutifs de la bande de roulement ont une température de transition vitreuse Tg au moins égale à -28°C et au plus égale à -26°C. Cette plage de valeurs de température de transition vitreuse Tg permet d'atteindre un compromis satisfaisant entre la résistance au roulement et l'adhérence sur sol mouillé, avec le point de fonctionnement particulier des pneumatiques de camionnette. La température de transition vitreuse Tg est basse ce qui est favorable à la résistance au roulement, mais suffisamment élevée favorable à l'adhérence sur sol mouillé aux pressions et aux charges d'utilisation de ces pneumatiques.

Avantageusement le ou les mélanges élastomériques constitutifs de la bande de roulement ont une dureté Shore A au moins égale à 60. Ces plages de valeurs de dureté Shore A permettent d'atteindre un compromis satisfaisant entre le comportement et l'adhérence, avec une dureté Shore A suffisamment basse (mélange élastomérique mou) favorable à l'adhérence, et suffisamment élevée (mélange élastomérique rigide) favorable au comportement.

Avantageusement de part et d'autre du plan équatorial, le point le plus axialement extérieur de la couche de frettage est axialement extérieur au point le plus axialement extérieur de la couche de travail la plus radialement extérieure. Cette architecture est favorable à la rigidification de la structure et donc au comportement.

Selon un mode de réalisation préféré de l'armature de frettage, les renforts textiles de la au moins une couche de frettage de l'armature de frettage comprennent un polyamide aromatique, tel que l'aramide. L'aramide a un module d'extension élevé et donc une faible déformabilité, ce qui est favorable à une fonction de frettage du pneumatique.

Selon une première variante du mode de réalisation préféré de l'armature de frettage, les renforts textiles de la au moins une couche de frettage de l'armature de frettage comprennent une combinaison d'un polyamide aromatique, tel que l'aramide, et d'un polyamide aliphatique, tel que le nylon. De tels renforts sont également appelés renforts hybrides et présentent l'avantage d'avoir un comportement mécanique en extension dit « bi-module », caractérisé par un bas module d'extension, celui du nylon, et donc une grande déformabilité, pour de petits allongements, et un module d'extension élevé et donc une plus faible déformabilité, pour de grands allongements.

Selon une variante du mode de réalisation préféré de l'armature de frettage, les renforts textiles de la au moins une couche de frettage de l'armature de frettage comprennent une combinaison d'un polyamide aromatique, tel que l'aramide, et d'un polyester, tel que le polyéthylène téréphtalate (PET). De tels renforts sont également des renforts hybrides qui présentent les mêmes avantages que ceux décrits précédemment.

Dans une variante, le point le plus radialement extérieur de la couche intermédiaire est radialement extérieur au point le plus radialement intérieur de la surface de fond de la bande de roulement le plus proche, et préférentiellement radialement intérieur au point le plus radialement extérieur du témoin d'usure. Cette variante est très favorable à la résistance au roulement car elle diminue l'hystérèse moyenne du bloc sommet tout en garantissant que seul un matériau conçu à cet usage est en contact avec le sol de roulage.

Avantageusement, la couche intermédiaire est profilée à ses extrémités axiales et d'une épaisseur radiale moyenne au moins égale à 3 mm et au plus égale à 5 mm. Cette progressivité de l'épaisseur de la couche intermédiaire permet une gestion axiale des rigidités de la bande de roulement. A proximité du plan équateur, sous les éléments en relief, la couche intermédiaire est d'épaisseur maximale et cette épaisseur peut être variable pour décroitre sous les creux principaux et augmenter ou pas sous des éléments en relief de la bande de roulement axialement décalés du plan équateur. Il est préféré que l'épaisseur décroisse progressivement et continûment aux extrémités de la couche intermédiaire afin de compenser la perte de rigidité des couches de travail en raison des effets de bord de leurs propres extrémités axiales. Pour une résistance au roulement équilibrée avec le comportement, on préfèrera une épaisseur comprise entre 3 et 5 mm.

De préférence la couche intermédiaire est constituée d'un mélange élastomérique d'une perte dynamique tgδa à 23°C au moins égale à 0.05 et au plus égale à 0.15.

Dans ces gammes pour faciliter l'usage des pneumatiques, il est préféré qu'aucun sens de montage privilégié ne soit indiqué.

C'est l'équilibre entre la température de transition vitreuse Tg, la rigidité, du mélange élastomérique de la bande de roulement, les pertes dynamiques des mélanges élastomériques constitutifs de la bande de roulement et de la couche intermédiaire, associé à une sculpture et à une architecture optimisées qui permet d'obtenir les performances améliorées de résistance au roulement, adhérence et de comportement. Les autres caractéristiques énoncées permettent d'améliorer encore davantage le compromis de performance recherché.

Il convient d'adapter l'ensemble de ces paramètres de conception aux pressions et charges usuelles de ce type de véhicules notamment aux températures obtenues en surface de contact.

En conclusion, la combinaison des caractéristiques essentielles de l'invention permet bien d'apporter un avantage en résistance au roulement sans dégrader l'adhérence.

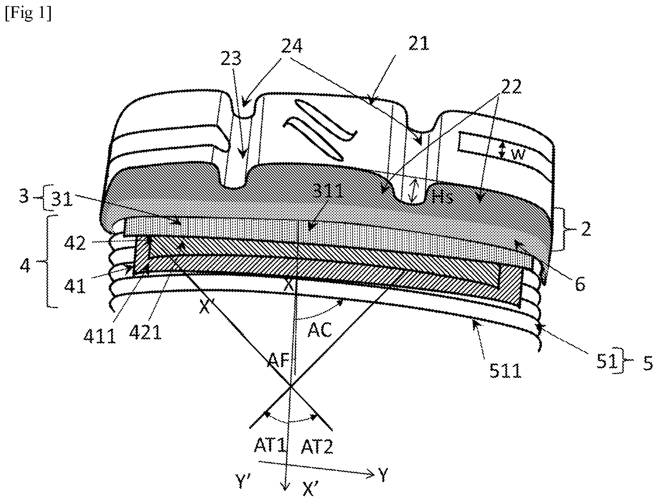

L'invention est illustrée par la figure 1 d'une coupe en perspective d'un pneumatique selon l'invention, non représentée à l'échelle et décrite ci-après.

### [Fig 1]

La figure 1 représente une coupe méridienne en perspective, dans un plan méridien YZ, d'un pneumatique pour véhicule de camionnette selon l'invention. Le pneumatique comprend, le plus radialement à l'extérieur, une bande de roulement 2, destinée à entrer en contact avec un sol par l'intermédiaire d'une surface de roulement 21 et comprenant des éléments en relief 22 s'étendant radialement vers l'extérieur à partir d'une surface de fond 23 jusqu'à la surface de roulement 21 sur une hauteur de sculpture Hs du pneumatique, au moins égale à 6.5 mm et au plus égale à 9 mm. Les éléments en relief 22 ont un volume total Vp et sont séparés par des creux 24 ayant un volume total Vc. Une partie des creux 24 sont des creux principaux, ayant chacun une largeur moyenne au moins égale à 6 mm et l'ensemble des creux principaux ayant un volume total Vcp. La bande de roulement 2 a un taux d'entaillement volumique TEV, défini comme le rapport entre le volume total Vc des creux 24 et la somme du volume total Vc des creux 24 et du volume total Vp des éléments en relief 22, au moins égal à 18% et au plus égal à 23%. La bande de roulement 2 est constituée par un mélange élastomérique ayant une température de transition vitreuse Tg au moins égale à -30°C et au plus égale à -24°C, une dureté Shore A au moins égale à 55 et au plus égale à 66 et une perte dynamique tgδ à 23°C au moins égale à 0.15 et au plus égale à 0.27. Le pneumatique comprend en outre, une couche intermédiaire 6 comprenant un mélange élastomérique et positionnée radialement à l'intérieur de la bande de roulement 2 et dont la perte dynamique tgδa à 23°C au moins égale à 0.05 et au plus égale à 0.15 et au plus égale à la perte dynamique tgδ à 23°C du ou des matériaux constitutifs de la bande de roulement. Le pneumatique comprend également une armature de frettage 3, radialement intérieure à la couche intermédiaire 6 et comprenant une couche de frettage 31, une armature de travail 4, radialement intérieure à l'armature de frettage 3 et comprenant deux couches de travail (41, 42) radialement superposées, et, enfin, une armature de carcasse 5 comprenant une couche de carcasse 51.

La couche de frettage 31 comprend des renforts textiles 311 enrobés dans un mélange élastomérique, parallèles entre eux et formant, avec une direction circonférentielle XX' du pneumatique, un angle AF, mesuré dans le plan équatorial XZ du pneumatique, au plus égal à 5° en valeur absolue. Les deux couches de travail (41, 42) comprennent chacune des renforts métalliques (411, 421) enrobés dans un mélange élastomérique, parallèles entre eux dans chaque couche et croisés d'une couche à la suivante, en formant, avec la direction circonférentielle XX' du pneumatique, un angle (AT1, AT2), mesuré dans le plan équatorial XZ du pneumatique, dont la valeur absolue est au moins égale à 23° et au plus égale à 30°. La couche de carcasse 51 comprend des renforts textiles 511 enrobés dans un matériau élastomérique, parallèles entre eux et formant, avec la direction circonférentielle XX' du pneumatique, un angle AC au moins égal à 85° et au plus égal 95°.

L'invention a été plus particulièrement étudiée pour un pneumatique de camionnette de dimension 235/65R16, d'une pression nominale de 4.75b et d'un indice de charge 115. Un pneumatique de référence Ref a été comparé à un pneumatique Inv selon l'invention.

La bande de roulement du pneumatique de référence Ref comprend des éléments en relief s'étendant radialement sur une hauteur de sculpture Hs égale à 9.6 mm. Le taux d'entaillement volumique TEV de la bande de roulement est égal à 19%. Le mélange élastomérique de la bande de roulement a une température de transition vitreuse Tg égale à -23°C, une dureté Shore A égale à 68 et une perte dynamique tgδ à 23°C égale à 0.29. Le pneumatique de référence Ref ne comprend pas de couche intermédiaire radialement à l'intérieur de la bande de roulement. L'armature de frettage comprend une couche de frettage dont les renforts textiles sont en nylon de titre 140/2 (assemblage de 2 surtors de 140 tex chacun, 1 tex étant la masse en g de 1000 m de fil) et répartis dans la couche de frettage avec une densité de 98 fils/dm. L'armature de travail comprend deux couches de travail radialement superposées. Les renforts métalliques de formule 4.32 (assemblage torsadé de quatre fils métalliques ayant chacun un diamètre égal à 0.32 mm) de la couche de travail radialement la plus intérieure et de la couche de travail radialement la plus extérieure sont répartis à un pas égal à 1.4 mm et forment, avec la direction circonférentielle XX' du pneumatique, un angle (AT1, AT2), mesuré dans le plan équatorial XZ du pneumatique, respectivement égal à +22° et -22°. L'épaisseur radiale moyenne EpT de chaque couche de travail est égale à 1.23 mm. L'armature de carcasse est constituée par deux couches de carcasse dont les renforts textiles sont en polyéthylène téréphtalate (PET) de titre 144/2 (assemblage de 2 surtors de 144 tex chacun), avec une torsion de 420 tours/m et répartis dans la couche de carcasse avec une densité de 104 fils/dm. L'épaisseur des mélanges élastomériques de renfort flanc axialement extérieurs à la couche de carcasse la plus radialement extérieure d'une épaisseur axiale Epf, mesurée au point le plus axialement extérieur du pneumatique, est égale à 3.7 mm.

La bande de roulement du pneumatique selon l'invention Inv comprend des éléments en relief s'étendant radialement sur une hauteur de sculpture Hs égale à 8.2 mm. Le taux d'entaillement volumique TEV de la bande de roulement est égal à 21%. Le mélange élastomérique de la bande de roulement a une température de transition vitreuse Tg égale à -28°C, une dureté Shore A égale à 60 et une perte dynamique tgδ à 23°C égale à 0.18. Le pneumatique selon l'invention comprend en outre une couche intermédiaire, radialement à l'intérieur de la bande de roulement et radialement à l'extérieur de l'armature de frettage, constituée par un mélange élastomérique ayant une perte dynamique tgδ à 23°C égale à 0.11. Les armatures de frettage et les couches de travail et de carcasse ne sont pas modifiées entre le pneumatique de référence Ref et le pneumatique selon l'invention Inv, hormis l'angle des couches de travail dont la valeur (AT1, AT2), mesuré dans le plan équatorial XZ du pneumatique, respectivement égal à +24° et -24°.

La bande de roulement du pneumatique de référence Ref ne comprend pas d'élastomère diénique modifié comprenant au moins un groupe fonctionnel, c'est un mélange élastomérique classique pour ce type d'application. La bande de roulement du pneumatique selon l'invention Inv comprend un élastomère diénique modifié comprenant au moins un groupe fonctionnel comprenant un atome de silicium, ce dernier se situant en bout de chaîne.

Les pneumatiques Inv et Ref ont été soumis à divers tests et mesures comparatifs. Les résultats, présentés ci-dessous, sont exprimés respectivement pour Inv par rapport Ref (référence ou base 100):
- Résistance au roulement : -1.9 kg/t
- Adhérence longitudinale (distance de freinage) sur sol sec (base 100) : 100
- Adhérence longitudinale (distance de freinage) sur sol mouillé (base 100) : 99

Par rapport au pneumatique Ref de l'état de la technique pris en référence, le pneumatique Inv selon l'invention présente une diminution de la résistance au roulement de 1.9 kg/t, avec des performances en adhérence longitudinale équivalentes.

## Revendications

1. Pneumatique pour véhicule de transport dont la pression nominale est au moins égale à 3.2 bar et au plus égale à 6 bar, pour un indice de charge au moins égal à 88 et au plus égal à 121comprenant :
- une bande de roulement (2), destinée à entrer en contact avec un sol par l'intermédiaire d'une surface de roulement (21) et comprenant des éléments en relief (22) s'étendant radialement vers l'extérieur à partir d'une surface de fond (23) jusqu'à la surface de roulement (21) sur une hauteur radiale maximale Hs,
- les éléments en relief (22) ayant un volume total Vp et étant séparés par des creux (24) ayant un volume total Vc, une partie des creux (24) étant des creux principaux, ayant chacun une largeur moyenne(W) au moins égale à 6 mm et l'ensemble des creux principaux ayant un volume total Vcp, la bande de roulement comprenant au moins un témoin d'usure,
- la bande de roulement (2) ayant un taux d'entaillement volumique TEV, défini comme le rapport entre le volume total Vc des creux (24) et la somme du volume total Vc des creux (24) et du volume total Vp des éléments en relief (22), au moins égal à 18% et au plus égal à 23%,
- la bande de roulement (2) comprenant en outre au moins un mélange élastomérique ayant une température de transition vitreuse Tg, une dureté Shore A et une perte dynamique tgδ à 23°C,
- une couche intermédiaire (6) radialement intérieure à la bande de roulement (2) comprenant en outre un mélange élastomérique ayant une perte dynamique tgδa à 23°C,
- une armature de frettage (3), radialement intérieure à la couche intermédiaire (6), comprenant au moins une couche de frettage (31) comprenant des renforts textiles (311) enrobés dans un mélange élastomérique, parallèles entre eux et formant, avec une direction circonférentielle XX' du pneumatique, un angle AF, mesuré dans le plan équatorial XZ du pneumatique, au plus égal à 5°en valeur absolue,
- une armature de travail (4), radialement intérieure à l'armature de frettage (3), comprenant au moins deux couches de travail (41, 42), radialement superposées, comprenant des renforts métalliques (411, 421) enrobés dans un mélange élastomérique, parallèles entre eux dans chaque couche et croisés d'une couche à la suivante, en formant, avec la direction circonférentielle XX' du pneumatique, un angle (AT1, AT2), mesuré dans le plan équatorial XZ du pneumatique, dont la valeur absolue est au moins égale à 23° et au plus égale à 30°,
- une armature de carcasse (5) comprenant au moins une couche de carcasse (51) et au plus deux couches de carcasse, chaque couche de carcasse comprenant des renforts textiles (511) enrobés dans un matériau élastomérique, parallèles entre eux et formant, avec la direction circonférentielle XX' du pneumatique, un angle AC au moins égal à 85° et au plus égal 95°,
- des mélanges élastomériques de renfort flanc (XX) axialement extérieurs à la couche de carcasse la plus radialement extérieure, d'une épaisseur axiale Epf, mesurée au point le plus axialement extérieur du pneumatique,
**caractérisé en ce que** le au moins un mélange élastomérique de la bande de roulement (2) a une température de transition vitreuse Tg au moins égale à -30°C et au plus égale à -24°C, une dureté Shore A au moins égale à 55 et au plus égale à 66 et une perte dynamique tgδ à 23°C au moins égale à 0.15 et au plus égale à 0.27, **en ce que** le mélange élastomérique de la couche intermédiaire (6) a une perte dynamique tgδa à 23°C au plus égale à la perte dynamique tgδ du ou des mélanges élastomériques constituant la bande de roulement, **et en ce que** la hauteur sculpture Hs est au moins égale à 6.5 mm et au plus égale à 9 mm, l'épaisseur axiale Epf est au moins égale à 3mm et au plus égal à 7mm.

2. Pneumatique selon la revendication 1, **dans lequel** l'armature de carcasse (5) est constituée de deux couches de carcasse(51).

3. Pneumatique selon l'une des revendications 1 ou 2, dans lequel de part et d'autre du plan équatorial, le point le plus axialement extérieur de la couche de frettage (31) est axialement extérieur au point le plus axialement extérieur de la couche de travail (42) la plus radialement extérieure.

4. Pneumatique selon l'une quelconque des revendications 1 à 3, dans lequel le point le plus radialement extérieur de la couche intermédiaire (6) est radialement extérieur au point le plus radialement intérieur de la surface de fond (23) de la bande de roulement (2) le plus proche, et préférentiellement radialement intérieur au point le plus radialement extérieur du témoin d'usure.

5. Pneumatique selon l'une des revendications 1 à 4, dans lequel, la couche intermédiaire (6) est profilée à ses extrémités axiales et d'une épaisseur radiale moyenne au moins égale à 3 mm et au plus égale à 5 mm et est constituée d'un mélange élastomèrique d'une perte dynamique tgδa à 23°C au moins égale à 0.05 et au plus égale à 0.15.

6. Pneumatique selon l'une quelconque des revendications 1 à 5, dans lequel la bande de roulement comprend un élastomère diénique modifié comprenant au moins un groupe fonctionnel comprenant un atome de silicium, ce dernier se situant au sein de la chaîne principale de l'élastomère y compris les extrémités de chaîne.

7. Pneumatique selon l'une quelconque des revendications 1 à 6, dans lequel l'élastomère diénique modifié du mélange élastomérique de la bande de roulement (2) comprend un groupe fonctionnel comprenant un atome de silicium en une extrémité de la chaîne principale de l'élastomère.

8. Pneumatique selon l'une quelconque des revendications de 1 à 6, dans lequel l'élastomère diénique modifié du mélange élastomérique de la bande de roulement (2) comprend un groupe fonctionnel comprenant un atome de silicium en milieu de chaîne.

9. Pneumatique selon l'une quelconque des revendications 1 à 8 dans lequel la bande de roulement comprend des creux formant un angle avec la direction longitudinale au moins égal à 40°, ayant une largeur variable d'une valeur moyenne au plus égale à 2 mm.

10. Pneumatique selon l'une quelconque des revendications 1 à 9, dans lequel la hauteur radiale maximale Hs, est au moins égale à 7 mm et au plus égale à 8.5 mm.

## Patentansprüche

1. Reifen für ein Transportfahrzeug mit einem Nenndruck von mindestens 3,2 bar und höchstens 6 bar für einen Lastindex von mindestens 88 und höchstens 121, umfassend:
- einen Laufstreifen (2), der dazu bestimmt ist, über eine Lauffläche (21) mit einem Untergrund in Kontakt zu treten, und der Reliefelemente (22) umfasst, die sich über eine maximale radiale Höhe Hs von einer Bodenfläche (23) radial nach außen bis zur Lauffläche (21) erstrecken,
- wobei die Reliefelemente (22) ein Gesamtvolumen Vp aufweisen und durch Vertiefungen (24) mit einem Gesamtvolumen Vc getrennt sind, wobei ein Teil der Vertiefungen (24) Hauptvertiefungen sind, die jeweils eine mittlere Breite (W) von mindestens 6 mm aufweisen, und wobei die Gesamtheit der Hauptvertiefungen ein Gesamtvolumen Vcp aufweist, wobei der Laufstreifen mindestens einen Verschleißindikator aufweist,
- wobei der Laufstreifen (2) einen Volumennegativanteil TEV, der als das Verhältnis zwischen dem Gesamtvolumen Vc der Vertiefungen (24) und der Summe des Gesamtvolumens Vc der Vertiefungen (24) und des Gesamtvolumens Vp der Reliefelemente (22) definiert ist, von mindestens gleich 18 % und höchstens gleich 23 % aufweist,
- wobei der Laufstreifen (2) ferner mindestens eine Elastomermischung mit einer Glasübergangstemperatur Tg, einer Shore-Härte A und einem dynamischen Verlust tgδ bei 23 °C umfasst,
- eine Zwischenschicht (6) radial innerhalb des Laufstreifens (2), die ferner eine Elastomermischung mit einem dynamischen Verlust tgδa bei 23 °C umfasst,
- eine Umhüllungsbewehrung (3) radial innerhalb der Zwischenschicht (6), die mindestens eine Umhüllungsschicht (31) umfasst, die textile Verstärkungen (311) umfasst, die in eine Elastomermischung eingebettet sind, parallel zueinander verlaufen und mit einer Umfangsrichtung XX' des Reifens einen in der Äquatorialebene XZ des Reifens gemessenen Winkel AF bilden, dessen absoluter Wert höchstens gleich 5° beträgt,
- eine Arbeitsbewehrung (4) radial innerhalb der Umhüllungsbewehrung (3), die mindestens zwei radial übereinanderliegende Arbeitsschichten (41, 42) umfasst, die Metallverstärkungen (411, 421) umfassen, die in eine Elastomermischung eingebettet sind, in jeder Schicht parallel zueinander verlaufen, einander von einer Schicht zur nächsten kreuzen und dabei mit der Umfangsrichtung XX' des Reifens einen in der Äquatorialebene XZ des Reifens gemessenen Winkel (AT1, AT2) bilden, dessen absoluter Wert mindestens gleich 23° und höchstens gleich 30° beträgt,
- eine Karkassenbewehrung (5), die mindestens eine Karkassenschicht (51) und höchstens zwei Karkassenschichten umfasst, wobei jede Karkassenschicht textile Verstärkungen (511) umfasst, die in ein Elastomermaterial eingebettet sind, parallel zueinander verlaufen und mit der Umfangsrichtung XX' des Reifens einen Winkel AC von mindestens gleich 85° und höchstens gleich 95° bilden,
- Flankenverstärkungselastomermischungen (XX) axial außerhalb der radial äußersten Karkassenschicht mit einer am axial äußersten Punkt des Reifens gemessenen axialen Dicke Epf,
**dadurch gekennzeichnet, dass** die mindestens eine Elastomermischung des Laufstreifens (2) eine Glasübergangstemperatur Tg von mindestens gleich -30 °C und höchstens gleich -24 °C, eine Shore-Härte A von mindestens gleich 55 und höchstens gleich 66 und einen dynamischen Verlust tgδ bei 23°C von mindestens gleich 0,15 und höchstens gleich 0,27 aufweist, dass die Elastomermischung der Zwischenschicht (6) einen dynamischen Verlust tgδa bei 23°C aufweist, der höchstens gleich dem dynamischen Verlust tgδ der Elastomermischung(en) ist, die die Laufstreifen bilden, und dass die Profilhöhe Hs mindestens gleich 6,5 mm und höchstens gleich 9 mm beträgt und die axiale Dicke Epf mindestens gleich 3 mm und höchstens gleich 7 mm beträgt.

2. Reifen nach Anspruch 1, wobei die Karkassenbewehrung (5) aus zwei Karkassenschichten (51) gebildet ist.

3. Reifen nach einem der Ansprüche 1 oder 2, wobei auf beiden Seiten der Äquatorialebene der axial äußerste Punkt der Umhüllungsschicht (31) axial außerhalb des axial äußersten Punkts der radial äußersten Arbeitsschicht (42) liegt.

4. Reifen nach einem der Ansprüche 1 bis 3, wobei der radial äußerste Punkt der Zwischenschicht (6) radial außerhalb des nächstgelegenen radial innersten Punkts der Bodenfläche (23) des Laufstreifens (2) und vorzugsweise radial innerhalb des radial äußersten Punkts des Verschleißindikators liegt.

5. Reifen nach einem der Ansprüche 1 bis 4, wobei die Zwischenschicht (6) an ihren axialen Enden profiliert ist, eine mittlere radiale Dicke von mindestens gleich 3 mm und höchstens gleich 5 mm aufweist und aus einer Elastomermischung mit einem dynamischen Verlust tgδa bei 23°C von mindestens gleich 0,05 und höchstens gleich 0,15 gebildet ist.

6. Reifen nach einem der Ansprüche 1 bis 5, wobei der Laufstreifen ein modifiziertes Dienelastomer umfasst, das mindestens eine funktionelle Gruppe mit einem Siliciumatom umfasst, wobei sich diese funktionelle Gruppe innerhalb der Hauptkette des Elastomers einschließlich der Kettenenden befindet.

7. Reifen nach einem der Ansprüche 1 bis 6, wobei das modifizierte Dienelastomer der Elastomermischung des Laufstreifens (2) eine funktionelle Gruppe mit einem Siliciumatom an einem Ende der Hauptkette des Elastomers umfasst.

8. Reifen nach einem der Ansprüche 1 bis 6, wobei das modifizierte Dienelastomer der Elastomermischung des Laufstreifens (2) eine funktionelle Gruppe mit einem Siliciumatom in der Kettenmitte umfasst.

9. Reifen nach einem der Ansprüche 1 bis 8, wobei der Laufstreifen Vertiefungen umfasst, die mit der Längsrichtung einen Winkel von mindestens gleich 40° bilden und eine variable Breite mit einem Mittelwert von höchstens gleich 2 mm aufweisen.

10. Reifen nach einem der Ansprüche 1 bis 9, wobei die maximale radiale Höhe Hs mindestens gleich 7 mm und höchstens gleich 8,5 mm beträgt.

## Claims

1. Transport vehicle tyre of which the nominal pressure as at least equal to 3.2 bar and at most equal to 6 bar, for a load index at least equal to 88 and at most equal to 121, comprising:
- a tread (2) that is intended to come into contact with the ground via a tread surface (21) and comprising raised elements (22) extending radially outwards from a bottom surface (23) as far as the tread surface (21) over a maximum radial height Hs,
- the raised elements (22) having a total volume Vp and being separated by voids (24) having a total volume Vc, some of the voids (24) being main voids, each having a mean width (W) at least equal to 6 mm, and the main voids together having a total volume Vcp, the tread comprising at least one wear indicator,
- the tread (2) having a volumetric void ratio TEV, defined as being the ratio between the total volume Vc of the voids (24) and the sum of the total volume Vc of the voids (24) and of the total volume Vp of the raised elements (22), at least equal to 18% and at most equal to 23%,
- the tread (2) further comprising at least one elastomeric compound having a glass transition temperature Tg, a Shore A hardness and a dynamic loss factor tan6 at 23°C,
- an intermediate layer (6) radially on the inside of the tread (2) further comprising an elastomeric compound having a dynamic loss factor tanδa at 23°C,
- a hoop reinforcement (3), radially on the inside of the intermediate layer (6), comprising at least one hooping layer (31) comprising textile reinforcers (311) that are coated in an elastomeric compound, are mutually parallel and form, with a circumferential direction XX' of the tyre, an angle AF, measured in the equatorial plane XZ of the tyre, at most equal to 5° in terms of absolute value,
- a working reinforcement (4), radially on the inside of the hoop reinforcement (3), comprising at least two, radially superposed working layers (41, 42) comprising metal reinforcers (411, 421) that are coated in an elastomeric compound, are mutually parallel in each layer and are crossed from one layer to the next, forming, with the circumferential direction XX' of the tyre, an angle (AT1, AT2), measured in the equatorial plane XZ of the tyre, with an absolute value at least equal to 23° and at most equal to 30°,
- a carcass reinforcement (5) comprising at least one carcass layer (51) and at most two carcass layers, each carcass layer comprising textile reinforcers (511) that are coated in an elastomeric material, are mutually parallel and form, with the circumferential direction XX' of the tyre, an angle AC at least equal to 85° and at most equal to 95°,
- sidewall-reinforcing elastomeric compounds (XX) axially on the outside of the radially outermost carcass layer, of an axial thickness Epf, measured at the axially outermost point of the tyre,
**characterized in that** the at least one elastomeric compound of the tread (2) has a glass transition temperature Tg at least equal to -30°C and at most equal to -24°C, a Shore A hardness at least equal to 55 and at most equal to 66 and a dynamic loss factor tanδ at 23°C at least equal to 0.15 and at most equal to 0.27, **in that** the elastomeric compound of the intermediate layer (6) has a dynamic loss factor tanδa at 23°C at most equal to the dynamic loss factor tanδ of the elastomeric compound or compounds of which the tread is made, **and in that** the tread height Hs is at least equal to 6.5 mm and at most equal to 9 mm, the axial thickness Epf is at least equal to 3 mm and at most equal to 7 mm.

2. Tyre according to Claim 1, **wherein** the carcass reinforcement (5) is made up of two carcass layers (51).

3. Tyre according to either of Claims 1 and 2, **wherein,** on each side of the equatorial plane, the axially outermost point of the hooping layer (31) is axially on the outside of the axially outermost point of the radially outermost working layer (42).

4. Tyre according to any one of Claims 1 to 3, **wherein** the radially outermost point of the intermediate layer (6) is radially on the outside of the radially innermost point of the bottom surface (23) of the tread (2) that is nearest, and preferably radially on the inside of the radially outermost point of the wear indicator.

5. Tyre according to one of Claims 1 to 4, **wherein** the intermediate layer (6) is profiled at its axial ends and has a mean radial thickness at least equal to 3 mm and at most equal to 5 mm and is made up of an elastomeric compound having a dynamic loss factor tanδa at 23°C at least equal to 0.05 and at most equal to 0.15.

6. Tyre according to any one of Claims 1 to 5, **wherein** the tread comprises a modified diene elastomer comprising at least one functional group containing a silicon atom, the latter being situated within the main chain of the elastomer, including the ends of the chain.

7. Tyre according to any one of Claims 1 to 6, **wherein** the modified diene elastomer of the elastomeric compound of the tread (2) comprises a functional group containing a silicon atom at one end of the main chain of the elastomer.

8. Tyre according to any one of Claims 1 to 6, the modified diene elastomer of the elastomeric compound of the tread (2) comprises a functional group containing a silicon atom in the middle of the chain.

9. Tyre according to any one of Claims 1 to 8, **wherein** the tread comprises voids forming with the longitudinal direction an angle at least equal to 40°, having a variable width with a mean value at most equal to 2 mm.

10. Tyre according to any one of Claims 1 to 9, **wherein** the maximum radial height Hs is at least equal to 7 mm and at most equal to 8.5 mm.
